# EUROPÄISCHE PATENTANMELDUNG

(11) **EP 4 029 811 A1**
(43) Veröffentlichungstag der Anmeldung: **20.07.2022**
(21) Anmeldenummer: 21152249.5
(22) Anmeldetag: 19.01.2021
(51) Int. Cl.: B65G 17/24, B65B 65/00, B65G 47/54

(54) **FÖRDERBAND ZUM TRANSPORTIEREN VON FÖRDERGUT UND VERPACKUNGSLINIE EINER VERPACKUNGSANLAGE MIT EINEM SOLCHEN FÖRDERBAND**

(71) Anmelder: Illinois Tool Works INC., Glenview, IL 60025 (US)
(72) Erfinder: WÖHLE, Linus, 48480 Schapen (DE); KORTE, Hartmut, 49565 Bramsche (DE)
(74) Vertreter: Trinks, Ole

(57) **Zusammenfassung**

Die Erfindung betrifft ein Förderband (1) insbesondere für eine Verpackungslinie einer Verpackungsanlage zum Transportieren von Fördergut in Gestalt von insbesondere voneinander beabstandeten Produkten oder Produktgruppen in einer Hauptförderrichtung (11), wobei dem Förderband (1) eine erste Antriebseinheit (2) zugeordnet ist zum Antreiben des Förderbands (1) in der Hauptförderrichtung (11). Erfindungsgemäß ist insbesondere vorgesehen, dass das Förderband (1) bedarfsweise mit einer zweiten Antriebseinheit (4) ansteuer- oder antreibbare Antriebsmittel (3) aufweist zum bedarfsweisen Beschleunigen von mindestens einem von dem Förderband (1) in der Hauptförderrichtung (11) transportierten Produkt oder von mindestens einer von dem Förderband (1) in der Hauptförderrichtung (11) transportierten Produktgruppe in eine schräg oder quer zur Hauptförderrichtung (11) zeigenden Ausschleusrichtung (12). Dabei sind die Antriebsmittel (3) und/oder die zweite Antriebseinheit (4) ausgebildet, das mindestens eine von dem Förderband (1) in der Hauptförderrichtung (11) transportierte Produkt bzw. die Produktgruppe bedarfsweise in die Ausschleusrichtung (12) zu beschleunigen, ohne dass eine Geschwindigkeit des Produkts bzw. der Produktgruppe in Hauptförderrichtung (11) reduziert wird.

## Beschreibung

Die vorliegende Erfindung betrifft allgemein Verpackungslinien einer Verpackungsanlage und insbesondere Förderbänder für Verpackungslinien von Verpackungsanlagen.

Unter dem hierin verwendeten Begriff "Verpackungslinie" sind in der Regel in Reihe geschaltete und miteinander arbeitende Verpackungsmaschinen zu verstehen. Dabei übernehmen die Verpackungsmaschinen Aufgaben beispielsweise des Kartonfaltens und Kartonaufrichtens, der Kartonbefüllung und der Veredelung.

Verpackungslinie der hierin berücksichtigten Art weisen somit in der Regel verschiedene Verpackungseinheiten oder Verpackungsmaschinen auf, welche beispielsweise bereits gefüllte Verpackungen (hierin allgemein auch als "Produkte" bezeichnet) weiterverarbeiten, indem beispielsweise die gefüllten Verpackungen/Produkte zu Einheiten zusammengefügt werden (hierin allgemein auch als "Produktgruppe" bezeichnet) oder mit Strohhalmen, Etiketten oder dergleichen versehen werden.

Die einzelnen Verpackungsmaschinen innerhalb einer Verpackungslinie sind in der Regel sequenziell hintereinander angeordnet und über Förderbänder miteinander verbunden.

Um auf dem Förderband in Hauptförderrichtung transportierte fehlerhafte Produkte oder Produktgruppen zu erkennen und ggf. auszusondern, sind unterschiedliche Maßnahmen aus dem Stand der Technik bekannt.

So betrifft beispielsweise die Druckschrift DE 10 2009 003 847 A1 eine Variante zur Ausleitung von bewegten Objekten, wie Getränkebehältern oder dergleichen, aus einer Transportspur. Eine fehlerhafte Füllhöhe der Behälter kann beispielsweise mittels einer optischen Sensoreinrichtung oder einer Gewichtserfassung erkannt und das betroffene Produkt mittels eines linear und quer zur Transportrichtung beweglichen Schiebers verschoben und damit aus dem Hauptförderstrom ausgeleitet werden.

Herkömmliche Ansätze zum Aussondern oder Ausschleusen von Produkten oder Produktgruppen aus dem von einem Förderband vorgegebenen Hauptförderstrom stoßen an ihre Grenzen, wenn die auf dem Förderband in Hauptförderrichtung transportierten Produkte nur mit einem sehr geringen Abstand voneinander beabstandet sind, und/oder wenn die Transportgeschwindigkeit in Hauptförderrichtung relativ hoch ist. In solchen Fällen besteht bei den herkömmlichen Varianten zum Aussondern bzw. Ausschleusen von Produkten die Gefahr, dass beim Aussondern bzw. Ausschleusen das auszusondernde bzw. auszuschleusende Produkt mit einem in Hauptförderrichtung weiter transportierten, nachfolgenden Produkt kollidiert.

Auf Grundlage dieser Probleme liegt der Erfindung die Aufgabe zu Grunde, ein Förderband insbesondere für eine Verpackungslinie einer Verpackungsanlage zum Transportieren von Fördergut in Gestalt von insbesondere voneinander beabstandeten Produkten oder Produktgruppen in einer Hauptförderrichtung anzugeben, wobei bedarfsweise ein auf dem Förderband transportiertes Produkt aus dem Hauptförderstrom ausgeleitet/ausgeschleust werden kann, ohne dass die Gefahr einer Kollision mit insbesondere einem auf dem Förderband nachfolgenden und in Hauptförderrichtung transportierten Produkt auftritt, und zwar selbst dann, wenn auf dem Förderband die Produkte oder Produktgruppen sehr eng, d.h. mit nur sehr geringem Abstand, aufeinander folgen.

Des Weiteren soll eine entsprechende Verpackungslinie einer Verpackungsanlage mit einer entsprechenden Ausschleusstation angegeben werden, wobei die Ausschleusstation es ermöglicht, Produkte aus dem Hauptförderstrom seitlich auszuschleusen, auch wenn die Produkte in Hauptförderrichtung sehr eng aufeinander folgen.

Zusätzlich soll ein entsprechendes Verfahren zum bedarfsweisen Ausschleusen von mindestens einem auf einem Förderband in einer Hauptförderrichtung transportierten Produkt angegeben werden.

Im Hinblick auf das Förderband wird die der Erfindung zu Grunde liegende Aufgabe durch den Gegenstand des unabhängigen Patentanspruchs 1 gelöst, wobei vorteilhafte Weiterbildungen des erfindungsgemäßen Förderbands in den abhängigen Patentansprüchen 2 bis 8 angegeben sind.

Im Hinblick auf die Verpackungslinie wird die der Erfindung zu Grunde liegende Aufgabe durch den Gegenstand des nebengeordneten Patentanspruchs 9 gelöst, wobei vorteilhafte Weiterbildungen der erfindungsgemäßen Verpackungslinie in den abhängigen Patentansprüchen 10 bis 14 angegeben sind.

Im Hinblick auf das Verfahren wird die der Erfindung zu Grunde liegende Aufgabe durch den Gegenstand des nebengeordneten Patentanspruchs 15 gelöst.

Demgemäß betrifft die Erfindung insbesondere ein Förderband insbesondere für eine Verpackungslinie einer Verpackungsanlage zum Transportieren von Fördergut in Gestalt von insbesondere voneinander beabstandeten Produkten oder Produktgruppen in einer Hauptförderrichtung, wobei dem Förderband eine erste Antriebseinheit zugeordnet ist zum Antreiben des Förderbands in der Hauptförderrichtung.

Erfindungsgemäß ist insbesondere vorgesehen, dass das Förderband bedarfsweise mit einer zweiten Antriebseinheit ansteuer- oder antreibbare Antriebsmittel aufweist, um mindestens ein von dem Förderband in der Hauptförderrichtung transportiertes Produkt oder mindestens eine von dem Förderband in der Hauptförderrichtung transportierte Produktgruppe bedarfsweise in eine schräg oder quer zur Hauptförderrichtung zeigende Ausschleusrichtung zu beschleunigen.

Das erfindungsgemäße Förderband zeichnet sich insbesondere dadurch aus, dass beim Ausschleusen des mindestens einen Produkts bzw. der mindestens einen Produktgruppe die Geschwindigkeit des auszuschleusenden Produkts bzw. der auszuschleusenden Produktgruppe in Hauptförderrichtung nicht verändert und insbesondere reduziert wird.

Auf diese Weise wird verhindert, dass beim Ausschleusen des mindestens einen Produkts bzw. der mindestens einen Produktgruppe ein relativer Abstand des auszuschleusenden Produkts bzw. der auszuschleusenden Produktgruppe zu einem - in Hauptförderrichtung gesehen - stromaufwärtigen und/oder stromabwärtigen Produkt nicht verändert wird.

Somit ist sichergestellt, dass beim Ausschleusen von Produkten oder Produktgruppen aus dem durch das Förderband vorgegebenen Förderstrom auch dann sicher keine Kollision zwischen dem auszuschleusenden Produkt bzw. der auszuschleusenden Produktgruppe und einem Produkt/einer Produktgruppe auf dem Förderband auftreten kann, wenn die auf dem Förderband in Hauptförderrichtung transportierten Produkte nur mit einem sehr geringen Abstand voneinander beabstandet sind, und/oder wenn die Transportgeschwindigkeit in Hauptförderrichtung relativ hoch ist.

Das Besondere an dem erfindungsgemäßen Förderband ist, dass ein auszuschleusendes Produkt während des Ausschleusens in der durch das Förderband vorgegebenen Hauptförderrichtung seine Geschwindigkeit nicht verändert. Dies lässt eine hohe Produktflussrate zu.

Gemäß Realisierungen des erfindungsgemäßen Förderbands ist vorgesehen, dass die bedarfsweise ansteuer- oder antreibbaren Antriebsmittel und die den Antriebsmitteln zugeordnete zweite Antriebseinheit ausgebildet sind, das mindestens eine von dem Förderband in Hauptförderrichtung transportierte Produkt oder die mindestens eine von dem Förderband in Hauptförderrichtung transportierte Produktgruppe bedarfsweise in die Ausschleusrichtung zu beschleunigen, ohne dass eine Geschwindigkeit des mindestens einen Produkts oder der mindestens einen Produktgruppe in Hauptförderrichtung reduziert wird.

Als Antriebsmittel kommen beispielsweise Förderrollen und/oder Förderwalzen in Frage, die beim Betrieb der ersten Antriebseinheit mit dem Förderband in Hauptförderrichtung mittransportiert werden. Die Förderrollen und/oder Förderwalzen sind insbesondere um eine Drehachse relativ zu dem Förderband drehbar gelagert, wobei die Drehachse der Förderrollen/Förderwalzen parallel oder schräg zur Hauptförderrichtung verlaufen.

Bei dieser Realisierung bietet es sich an, dass die zweiten Antriebsmittel ausgebildet sind, bedarfsweise die Förderrollen und/oder Förderwalzen rotatorisch anzutreiben.

Dadurch, dass die Antriebsmittel in Gestalt beispielsweise von Förderrollen und/oder Förderwalzen mit dem Förderband in Hauptförderrichtung transportiert werden, ist sichergestellt, dass beim Ausschleusen von Produkten aus dem durch das Förderband vorgegebenen Förderstrom die auszuschleusenden Produkte mit gleichbleibender Geschwindigkeit in Hauptförderrichtung transportiert werden. Es ist ersichtlich, dass die Integration derartiger Förderrollen und Förderwalzen eine besonders leicht zu realisierende aber dennoch effektive Lösung darstellen, um den Ausschleusvorgang auch bei hohen Produktflussraten und nur geringen relativen Abständen der Produkte zu ermöglichen.

Grundsätzlich ist es denkbar, dass eine Ausrichtung der Drehachsen der Förderrollen/Förderwalzen relativ zu der Hauptförderrichtung einstellbar ist. Vorzugsweise verlaufen die Drehachsen der Förderrollen/Förderwalzen jedoch parallel zur Hauptförderrichtung des Förderbands, so dass die Ausschleusrichtung orthogonal (90°) zur Hauptförderrichtung des Förderbands verläuft.

Gemäß Realisierungen des erfindungsgemäßen Förderbands ist vorgesehen, dass das Förderband als mindestens eine Förderkette ausgeführt ist, die eine Vielzahl von in Hauptförderrichtung hintereinander angeordneten Kettenglieder aufweist. Diese Kettenglieder sind jeweils um eine senkrecht zur Hauptförderrichtung verlaufende Schwenkachse gelenkig miteinander verbunden. Vorzugsweise weist jedes Kettenglied eine Förderrolle und/oder Förderwalze auf, die um eine Drehachse relativ zu dem Kettenglied rotatorisch antreibbar ist.

In einer Weiterbildung dieses Aspekts ist insbesondere vorgesehen, dass das Förderband eine Vielzahl parallel zueinander angeordneter Förderketten aufweist, wobei jede Förderkette eine Vielzahl von in Hauptförderrichtung hintereinander angeordnete Kettenglieder aufweist, die jeweils um eine senkrecht zur Hauptförderrichtung verlaufende Schwenkachse gelenkig miteinander verbunden sind. Dabei kann insbesondere vorgesehen sein, dass jedes Kettenglied eine Förderrolle und/oder Förderwalze aufweist, die um eine Drehachse relativ zu dem Kettenglied rotatorisch antreibbar ist.

Zum bedarfsweisen Antreiben der Förderrollen und/oder Förderwalzen kann die zweite Antriebseinheit einen Bandantrieb, insbesondere in Gestalt eines Riemenbands und vorzugsweise in Gestalt eines Zahnriemenbands, aufweisen, wobei der Bandantrieb unterhalb des Förderbands verläuft und insbesondere in Ausschleusrichtung ausgerichtet ist.

Hierbei ist es beispielsweise denkbar, dass der Bandantrieb in vertikaler Richtung relativ zu dem Förderband zwischen einer ersten Position und einer zweiten Position bewegbar ist. In der ersten Position des Bandantriebs liegt vorzugsweise kein Kontakt zwischen dem Bandantrieb und den Förderrollen und/oder Förderwalzen vor, wobei hingegen in der zweiten Position des Bandantriebs ein Kontakt, insbesondere Reibkontakt, zwischen dem Bandantrieb und den Förderrollen/Förderwalzen derart vorliegt, dass über den Bandantrieb die Förderrollen/Förderwalzen rotatorisch antreibbar sind.

Die erfindungsgemäße Verpackungslinie ist insbesondere eine Verpackungslinie einer Verpackungsanlage und weist ein Förderband zum Transportieren von Fördergut in Gestalt von einander beabstandeten Produkten oder Produktgruppen sowie eine Ausschleusstation auf, um bedarfsweise aus dem Förderstrom des Förderbands Produkte oder Produktgruppen in ein zumindest im Übergabebereich schräg oder quer zur Hauptförderrichtung des Förderbands verlaufendes Ausschleusband auszuschleusen.

Die Ausschleusstation der Verpackungslinie ist erfindungsgemäß insbesondere derart ausgebildet, dass beim Ausschleusen von einem Produkt oder einer Produktgruppe aus dem durch das Förderband vorgegebenen Förderstrom zumindest im Übergangsbereich ein Abstand zwischen dem auszuschleusenden Produkt bzw. der auszuschleusenden Produktgruppe und einem im Förderstrom des Förderbands benachbarten Produkt bzw. Produktgruppe unverändert oder zumindest im Wesentlichen unverändert bleibt.

Insbesondere ist bei der erfindungsgemäßen Verpackungslinie vorgesehen, dass das Förderband ausgebildet ist, im Übergabebereich der Ausschleusstation die auszuschleusenden Produkte oder Produktgruppen mit der gleichen Transportgeschwindigkeit in Hauptförderrichtung zu transportieren, wie Produkte oder Produktgruppen, die nicht im Übergabebereich der Ausschleusstation auszuschleusen sind.

Hierzu ist insbesondere die Ausschleusstation derart ausgebildet, dass im Übergabebereich auf ein auszuschleusendes Produkt oder auf eine auszuschleusende Produktgruppe eine Geschwindigkeitskomponente in Richtung des Ausschleusbands ausgeübt wird, und zwar zusätzlich zu der von dem Förderband auf das Produkt oder auf die Produktgruppe in Hauptförderrichtung ausgeübten Geschwindigkeitskomponente und insbesondere ohne dass im Übergabebereich eine Geschwindigkeit des Produkts oder der Produktgruppe in Hauptförderrichtung reduziert wird.

Die mit der erfindungsgemäßen Verpackungslinie erzielbaren Vorteile wurden bereits im Zusammenhang mit dem erfindungsgemäßen Förderband beschrieben. Insbesondere ist es somit möglich, bedarfsweise Produkte oder Produktgruppen aus dem von dem Förderband vorgegebenen Förderstrom auszuschleusen oder auszuleiten, ohne dass ein relativer Abstand zwischen dem auszuschleusenden Produkt bzw. der auszuschleusenden Produktgruppe und einem benachbart hiervon angeordneten Produkt oder Produktgruppe geändert wird. Somit ist auch bei relativ geringen Abständen zwischen den Produkten und bei hoher Transportgeschwindigkeit ein sicheres, d.h. kollisionsfreies Ausschleusen der Produkte möglich. Mit der erfindungsgemäßen Lösung ist somit die mit der Verpackungslinie realisierbare Produktflussrate erfüllbar im Vergleich zu aus dem Stand der Technik bekannten Lösungen zum bedarfsweisen Ausschleusen von Produkten.

Bei Realisierungen der erfindungsgemäßen Verpackungslinie sind der Ausschleusstation Antriebsmittel insbesondere in Gestalt von Antriebsrollen oder Antriebswalzen zugeordnet zum bedarfsweisen Beschleunigen eines auszuschleusenden Produkts oder einer auszuschleusenden Produktgruppe in Richtung des Ausschleusbands.

Insbesondere kann in diesem Zusammenhang vorgesehen sein, dass dem Förderband eine erste Antriebseinheit zum Antreiben des Förderbands in Hauptförderrichtung zugeordnet ist, wobei den Antriebsmitteln der Ausschleusstation eine zweite Antriebseinheit zugeordnet ist zum bedarfsweisen Antreiben der vorzugsweise als Antriebsrollen oder Antriebswalzen ausgeführten Antriebsmittel.

Das Ausschleusband kann beispielsweise als Rollenförderer insbesondere ohne eine entsprechend zugeordnete Antriebseinheit, und insbesondere als Schwerkraftrollenband ausgeführt sein. Alternativ hierzu ist es aber auch denkbar, dass das Ausschleusband als Förderband mit einer entsprechend zugeordneten Antriebseinheit ausgebildet ist.

Bei dem erfindungsgemäßen Verfahren handelt es sich um eine Verfahren zum bedarfsweisen Ausschleusen von mindestens einem auf einem Förderband in einer Hauptförderrichtung insbesondere mit einer vorab festgelegten oder festlegbaren und vorzugsweise konstanten Transportgeschwindigkeit transportierten Produkt bzw. Produktgruppe, wobei zum bedarfsweisen Ausschleusen des mindestens einen Produkts oder der mindestens einen Produktgruppe das auszuschleusende Produkt bzw. die auszuschleusende Produktgruppe in Richtung eines Ausschleusbands beschleunigt wird, und zwar ohne dass eine Geschwindigkeit des auszuschleusenden Produkts oder der auszuschleusenden Produktgruppe in Hauptförderrichtung verändert und insbesondere reduziert wird.

Nachfolgend wird unter Bezugnahme auf die beiliegenden Zeichnungen eine exemplarische Ausführungsform der Erfindung näher beschrieben.

Es zeigen:
- FIG. 1: schematisch und in einer isometrischen Ansicht eine exemplarische Ausführungsform des erfindungsgemäßen Förderbands; und
- FIG. 2: schematisch und in einer isometrischen Ansicht ein Detail eines Ausschleusbereichs des Förderbands gemäß FIG. 1.

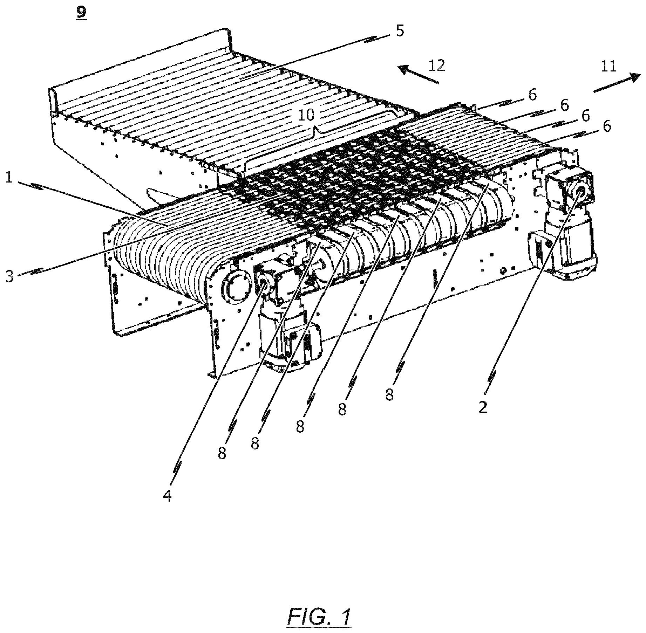

In FIG. 1 ist schematisch und in einer isometrischen Ansicht eine exemplarische Ausführungsform des erfindungsgemäßen Förderbands 1 dargestellt. Das Förderband 1 kann beispielsweise Teil einer Verpackungslinie einer Verpackungsanlage sein und dient insbesondere zum Transportieren von in FIG. 1 nicht gezeigtem Fördergut in einer Hauptförderrichtung 11.

Bei dem Fördergut handelt es sich insbesondere um voneinander beabstandete Produkte oder Produktgruppen.

Das in FIG. 1 gezeigte Förderband 1 ist als Umlauf- bzw. Endlosförderband ausgeführt und weist eine Vielzahl parallel zueinander angeordneter Förderketten 6 auf.

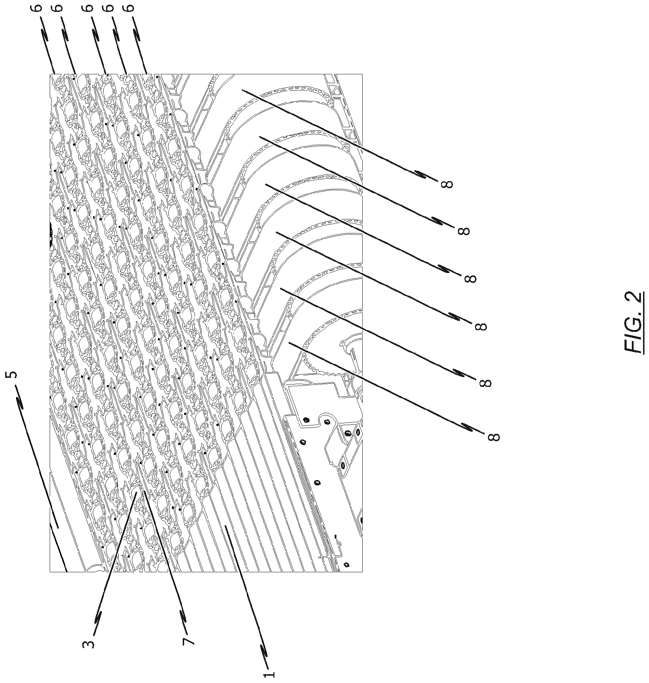

Wie es insbesondere der Detailansicht in FIG. 2 entnommen werden kann, weist jede Förderkette 6 eine Vielzahl von in Hauptförderrichtung 11 hintereinander angeordnete Kettenglieder 7 auf, die jeweils um eine senkrecht zur Hauptförderrichtung 11 verlaufende Schwenkachse gelenkig miteinander verbunden sind.

Zurückkommend auf die Darstellung in FIG. 1 ist dem Förderband 1 eine erste Antriebseinheit 2 zugeordnet, um das Förderband 1 mit dem auf dem Förderband 1 aufgenommenen Fördergut (nicht in FIG. 1 gezeigt) mit einer vorab festlegbaren oder festgelegten Transportgeschwindigkeit in Hauptförderrichtung 11 zu transportieren.

Im Einzelnen ist in FIG. 1 das Förderband 1 im Bereich einer Ausschleusstation 9 gezeigt. Zu dieser Ausschleusstation 9 gehört ein Ausschleusband 5, auf welches bedarfsweise Produkte aus dem von dem Förderband 1 vorgegebenen Hauptförderstrom ausgesondert oder ausgeschleust werden kann. Das Ausschleusband 5 ist bei der in FIG. 1 schematisch gezeigten Ausführungsform orthogonal zur Hauptförderrichtung 11 des Förderbands 1 angeordnet.

Bei dem Ausschleusband 5 handelt es sich beispielsweise um einen Rollenförderer, dem keine Antriebseinheit zugeordnet sein muss. Insbesondere kann das Ausschleusband 5 als Schwerkraftrollenband ausgeführt sein.

Selbstverständlich ist die vorliegende Erfindung jedoch nicht auf derartige Ausschleusbänder 5 beschränkt. Vielmehr ist es auch denkbar, dass das Ausschleusband 5 als Förderband 1 mit einer eigenen entsprechend zugeordneten Antriebseinheit ausgebildet ist.

Die in FIG. 1 gezeigte exemplarische Ausführungsform des erfindungsgemäßen Förderbands 1 zeichnet sich dadurch aus, dass in dem Übergabebereich 10 der Ausschleusstation 9 zu dem Ausschleusband 5 zum bedarfsweisen Ausschleusen eines Produkts auf das auszuschleusende Produkt eine Geschwindigkeitskomponente in Richtung des Ausschleusbands 5 ausgeübt wird, und zwar zusätzlich zu der von dem Förderband 1 auf das Produkt in Richtung der Hauptförderrichtung 11 ausgeübten Geschwindigkeitskomponente, und insbesondere ohne dass im Übergabebereich 10 eine Geschwindigkeit des auszuschleusenden Produkts in Hauptförderrichtung 11 reduziert wird. Hierzu ist das Förderband 1 ausgebildet, im Übergabebereich 10 der Ausschleusstation 9 das auszuschleusende Produkt mit der gleichen Transportgeschwindigkeit in Hauptförderrichtung 11 zu transportieren wie Produkte, die nicht im Übergabebereich 10 der Ausschleusstation 9 auszuschleusen sind, also Produkte, die nach wie vor mit dem Förderband 1 in dem von dem Förderband 1 vorgegebenen Hauptförderstrom transportiert werden.

Um dies zu erreichen, ist erfindungsgemäß vorgesehen, dass das Förderband 1 entsprechende Antriebsmittel 3 aufweist, die mit Hilfe einer zweiten Antriebseinheit 4 bedarfsweise ansteuer- oder antreibbar sind, und die dazu dienen, ein von dem Förderband 1 in der Hauptförderrichtung 11 transportiertes und auszuschleusendes Produkt in die quer zur Hauptförderrichtung 11 zeigende Ausschleusrichtung 12, die durch das Ausschleusband 5 vorgegeben wird, zu beschleunigen. Wesentlich hierbei ist, dass diese bedarfsweise ansteuer- oder antreibbaren Antriebsmittel 3 Teil des Förderbands 1 sind und beim Betrieb des Förderbands 1 mit in Hauptförderrichtung 11 des Förderbands 1 transportiert werden.

Mit anderen Worten, die Antriebsmittel 3 des Förderbands 1 sind ausgebildet, ein von dem Förderband 1 in der Hauptförderrichtung 11 transportiertes und auszuschleusendes Produkt bedarfsweise in die Ausschleusrichtung 12 zu beschleunigen, ohne dass eine Geschwindigkeit des auszuschleusenden Produkts in Hauptförderrichtung 11 reduziert wird.

Wie es insbesondere der Detaildarstellung in FIG. 2 entnommen werden kann, kommen bei der exemplarischen Ausführungsform des erfindungsgemäßen Förderbands 1 als Antriebsmittel 3 Förderrollen bzw. Förderwalzen zum Einsatz, welche beim Betrieb der ersten Antriebseinheit 2 mit dem Förderband 1 in Hauptförderrichtung 11 transportiert werden.

Insbesondere ist dabei vorgesehen, dass die Förderrollen bzw. Förderwalzen um eine Drehachse relativ zu dem Förderband 1 drehbar sind, wobei die Drehachse der Förderrollen bzw. Förderwalzen parallel zur Hauptförderrichtung 11 verlaufen.

Obgleich in den Zeichnungen nicht dargestellt, ist es grundsätzlich denkbar, dass eine Ausrichtung der Drehachsen der Förderrollen bzw. Förderwalzen relativ zu der Hauptförderrichtung 11 einstellbar ist, so dass die Drehachsen der Förderrollen bzw. Förderwalzen nicht zwangsläufig parallel zur Hauptförderrichtung 11 verlaufen müssen, sondern beispielsweise auch schräg zur Hauptförderrichtung 11 verlaufen können, wenn das Ausschleusband 5 nicht orthogonal zur Hauptförderrichtung 11 ausgerichtet ist, sondern schräg zur Hauptförderrichtung 11 verläuft.

Den Antriebsmitteln 3 in Gestalt von Förderrollen oder Förderwalzen ist eine zweite Antriebseinheit 4 zugeordnet, um bedarfsweise die Förderrollen bzw. Förderwalzen im Ausschleusbereich/Übergabebereich 10 der Ausschleusstation 9 rotatorisch anzutreiben.

Für die zweite Antriebseinheit 4 zum bedarfsweisen rotatorischen Antreiben der insbesondere als Förderrollen bzw. Förderwalzen ausgebildeten Antriebsmittel 3 kommen unterschiedliche Ausführungsformen in Frage.

Grundsätzlich ist es beispielsweise denkbar, dass jede Förderrolle bzw. jede Förderwalze einen eigenen insbesondere elektromotorischen Antrieb aufweist, um bedarfsweise die Förderrolle bzw. Förderwalze rotatorisch anzutreiben.

Allerdings kommt bei der in FIG. 1 und FIG. 2 gezeigten exemplarischen Ausführungsform des erfindungsgemäßen Förderbands 1 bzw. der erfindungsgemäßen Ausschleusstation 9 als zweite Antriebseinheit 4 eine andere Realisierung zum Einsatz.

Im Einzelnen ist bei der gezeigten exemplarischen Ausführungsform zum bedarfsweisen Antreiben der Förderrollen bzw. Förderwalzen als zweite Antriebseinheit 4 ein Bandantrieb 8, insbesondere in Gestalt mindestens eines Riemenbands vorgesehen, wobei der Bandantrieb 8 unterhalb des Förderbands 1 verläuft und insbesondere in Ausschleusrichtung 12 ausgerichtet ist. Indem der Bandantrieb 8 betätigt wird, werden über einen Reibkontakt zwischen dem Bandantrieb 8 und den Förderrollen bzw. Förderwalzen die Förderrollen bzw. Förderwalzen rotatorisch angetrieben.

In diesem Zusammenhang ist es grundsätzlich denkbar, dass der Bandantrieb 8 in vertikaler Richtung relativ zu dem Förderband 1 zwischen einer ersten und einer zweiten Position bewegbar ist, wobei in der ersten Position des Bandantriebs 8 kein Kontakt zwischen dem Bandantrieb 8 und den Förderrollen/Förderwalzen vorliegt, wobei allerdings in der zweiten Position des Bandantriebs 8 ein entsprechender Kontakt, insbesondere Reibkontakt zwischen dem Bandantrieb 8 und den entsprechenden Förderrollen/Förderwalzen vorliegt, so dass dann über den Bandantrieb 8 die entsprechenden Förderrollen/Förderwalzen rotatorisch angetrieben werden.

Wie es nachfolgend näher beschrieben wird, ist die Ausschleusstation 9 mit dem zuvor beschriebenen Förderband 1 derart ausgebildet, dass beim Ausschleusen von einem Produkt aus dem von dem Förderband 1 vorgegebenen Hauptförderstrom zumindest im Übergabebereich 10 der Ausschleusstation 9 der Abstand zwischen dem auszuschleusenden Produkt und einem im Förderstrom des Förderbands 1 benachbarten Produkt unverändert oder zumindest im Wesentlichen unverändert bleibt. Insbesondere ist die Ausschleusgeschwindigkeit unabhängig von der Fördergeschwindigkeit des Förderbands 1. Damit kann der Abstand zwischen dem Fördergut während des Ausschleusens konstant gehalten werden.

Die Erfindung ist nicht auf die in den Zeichnungen gezeigte exemplarische Ausführungsform beschränkt, sondern ergibt sich aus einer Zusammenschau sämtlicher hierin offenbarter Merkmale.

### Bezugszeichenliste

- 1: Förderband
- 2: erste Antriebseinheit
- 3: Antriebsmittel/Förderrolle/Förderwalze
- 4: zweite Antriebseinheit
- 5: Ausschleusband
- 6: Förderkette
- 7: Kettenglied
- 8: Bandantrieb/Riemenband
- 9: Ausschleusstation
- 10: Übergabebereich
- 11: Hauptförderrichtung
- 12: Ausschleusrichtung

## Patentansprüche

1. Förderband (1) insbesondere für eine Verpackungslinie einer Verpackungsanlage zum Transportieren von Fördergut in Gestalt von insbesondere voneinander beabstandeten Produkten oder Produktgruppen in einer Hauptförderrichtung (11), wobei dem Förderband (1) eine erste Antriebseinheit (2) zugeordnet ist zum Antreiben des Förderbands (1) in der Hauptförderrichtung (11), wobei das Förderband (1) bedarfsweise mit einer zweiten Antriebseinheit (4) ansteuer- oder antreibbare Antriebsmittel (3) aufweist zum bedarfsweisen Beschleunigen von mindestens einem von dem Förderband (1) in der Hauptförderrichtung (11) transportierten Produkt oder von mindestens einer von dem Förderband (1) in der Hauptförderrichtung (11) transportierten Produktgruppe in eine schräg oder quer zur Hauptförderrichtung (11) zeigenden Ausschleusrichtung (12), wobei die Antriebsmittel (3) und/oder die den Antriebsmitteln (3) zugeordnete zweite Antriebseinheit (4) ausgebildet sind, das mindestens eine von dem Förderband (1) in der Hauptförderrichtung (11) transportierte Produkt oder die mindestens eine von dem Förderband (1) in der Hauptförderrichtung (11) transportierte Produktgruppe bedarfsweise in die Ausschleusrichtung (12) zu beschleunigen, ohne dass eine Geschwindigkeit des mindestens einen Produkts oder der mindestens einen Produktgruppe in Hauptförderrichtung (11) reduziert wird.

2. Förderband (1) nach Anspruch 1,
wobei die Antriebsmittel (3) als mindestens eine Förderrolle und/oder Förderwalze ausgeführt sind, welche beim Betrieb der ersten Antriebseinheit (2) mit dem Förderband (1) in Hauptförderrichtung (11) transportiert wird, und wobei die mindestens eine Förderrolle und/oder Förderwalze um eine Drehachse relativ zu dem Förderband (1) drehbar ist, wobei die Drehachse der mindestens einen Förderrolle und/oder Förderwalze parallel oder schräg zur Hauptförderrichtung (11) verläuft.

3. Förderband (1) nach Anspruch 2,
wobei die zweiten Antriebsmittel (3) ausgebildet sind, bedarfsweise die mindestens eine Förderrolle und/oder Förderwalze rotatorisch anzutreiben.

4. Förderband (1) nach Anspruch 2 oder 3,
wobei eine Ausrichtung der Drehachse der mindestens einen Förderrolle und/oder Förderwalze relativ zu der Hauptförderrichtung (11) einstellbar ist.

5. Förderband (1) nach einem der Ansprüche 1 bis 4,
wobei das Förderband (1) als mindestens eine Förderkette (6) ausgeführt ist, die eine Vielzahl von in Hauptförderrichtung (11) hintereinander angeordneten Kettenglieder (7) aufweist, die jeweils um eine senkrecht zur Hauptförderrichtung (11) verlaufende Schwenkachse gelenkig miteinander verbunden sind, wobei vorzugsweise jedes Kettenglied (7) eine Förderrolle und/oder Förderwalze aufweist, die um eine Drehachse relativ zu dem Kettenglied (7) rotatorisch antreibbar ist.

6. Förderband (1) nach einem der Ansprüche 1 bis 5,
wobei das Förderband (1) eine Vielzahl parallel zueinander angeordneter Förderketten (6) aufweist, wobei jede Förderkette (6) eine Vielzahl von in Hauptförderrichtung (11) hintereinander angeordnete Kettenglieder (7) aufweist, die jeweils um eine senkrecht zur Hauptförderrichtung (11) verlaufende Schwenkachse gelenkig miteinander verbunden sind, wobei vorzugsweise jedes Kettenglied (7) eine Förderrolle und/oder Förderwalze aufweist, die um eine Drehachse relativ zu dem Kettenglied (7) rotatorisch antreibbar ist.

7. Förderband (1) nach einem der Ansprüche 2 bis 6,
wobei zum bedarfsweisen Antreiben der mindestens einen Förderrolle und/oder Förderwalze die zweite Antriebseinheit (4) einen Bandantrieb (8), insbesondere in Gestalt eines Riemenbands und vorzugsweise in Gestalt eines Zahnriemenbands, aufweist, wobei der Bandantrieb (8) unterhalb des Förderbands (1) verläuft und insbesondere in Ausschleusrichtung (12) ausgerichtet ist.

8. Förderband (1) nach Anspruch 7,
wobei der Bandantrieb (8) in vertikaler Richtung relativ zu dem Förderband (1) zwischen einer ersten Position und einer zweiten Position bewegbar ist, wobei in der ersten Position des Bandantriebs (8) kein Kontakt zwischen dem Bandantrieb (8) und der mindestens einen Förderrolle und/oder Förderwalze vorliegt, und wobei in der zweiten Position des Bandantriebs (8) ein Kontakt, insbesondere Reibkontakt, zwischen dem Bandantrieb (8) und der mindestens einen Förderrolle und/oder Förderwalze derart vorliegt, dass über den Bandantrieb (8) die mindestens eine Förderrolle und/oder Förderwalze rotatorisch antreibbar ist.

9. Verpackungslinie einer Verpackungsanlage mit einem Förderband (1) zum Transportieren von Fördergut in Gestalt von einander beabstandeten Produkten oder Produktgruppen und mit einer Ausschleusstation (9) zum bedarfsweisen Ausschleusen von auf dem Förderband (1) transportierten Produkten oder Produktgruppen in ein zumindest im Übergabebereich (10) schräg oder quer zur Hauptförderrichtung (11) verlaufendes Ausschleusband (5), wobei die Ausschleusstation (9) derart ausgebildet ist, dass beim Ausschleusen von einem Produkt oder einer Produktgruppe zumindest im Übergabebereich (10) der Abstand zwischen dem auszuschleusenden Produkt bzw. der auszuschleusenden Produktgruppe und einem im Förderstrom des Förderbands (1) benachbarten Produkt unverändert oder zumindest im Wesentlichen unverändert bleibt.

10. Verpackungslinie nach Anspruch 9,
wobei das Förderband (1) ausgebildet ist, im Übergabebereich (10) der Ausschleusstation (9) die auszuschleusenden Produkte oder Produktgruppen mit der gleichen Transportgeschwindigkeit in Hauptförderrichtung (11) zu transportieren wie Produkte oder Produktgruppen, die nicht im Übergabebereich (10) der Ausschleusstation (9) auszuschleusen sind.

11. Verpackungslinie nach Anspruch 9 oder 10,
wobei die Ausschleusstation (9) derart ausgebildet ist, dass im Übergabebereich (10) auf ein auszuschleusendes oder auf eine auszuschleusende Produktgruppe eine Geschwindigkeitskomponente in Richtung des Ausschleusbands (5) ausgeübt wird, und zwar zusätzlich zu der von dem Förderband (1) auf das Produkt oder auf die Produktgruppe in Richtung der Hauptförderrichtung (11) ausgeübten Geschwindigkeitskomponente, und insbesondere ohne dass im Übergabebereich (10) eine Geschwindigkeit des Produkts oder der Produktgruppe in Hauptförderrichtung (11) reduziert wird.

12. Verpackungslinie nach einem der Ansprüche 9 bis 11,
wobei der Ausschleusstation (9) Antriebsmittel (3) insbesondere in Gestalt von Antriebsrollen oder Antriebswalzen zugeordnet sind zum bedarfsweisen Beschleunigen eines auszuschleusenden Produkts oder einer auszuschleusenden Produktgruppe in Richtung des Ausschleusbands (5), und wobei dem Förderband (1) eine erste Antriebseinheit (2) zum Antreiben des Förderbands (1) in Hauptförderrichtung (11) zugeordnet ist, und wobei den Antriebsmitteln (3) der Ausschleusstation (9) eine zweite Antriebseinheit (4) zum bedarfsweisen Antreiben der Antriebsmittel (3) zugeordnet ist.

13. Verpackungslinie nach einem der Ansprüche 9 bis 12,
wobei das Ausschleusband (5) als Rollenförderer insbesondere ohne einer entsprechend zugeordneten Antriebseinheit, und insbesondere als Schwerkraftrollenband ausgeführt ist, oder wobei das Ausschleusband (5) als Förderband (1) mit einer entsprechend zugeordneten Antriebseinheit ausgebildet ist.

14. Verpackungslinie nach einem der Ansprüche 9 bis 13,
wobei das Förderband (1) ein Förderband (1) nach einem der Ansprüche 1 bis 8 ist.

15. Verfahren zum bedarfsweisen Ausschleusen von mindestens einem auf einem Förderband (1) in einer Hauptförderrichtung (11) insbesondere mit einer vorab festgelegten oder festlegbaren und vorzugsweise konstanten Transportgeschwindigkeit transportierten Produkt bzw. mindestens einer auf einem Förderband (1) in einer Hauptförderrichtung (11) insbesondere mit einer vorab festgelegten oder festlegbaren und vorzugsweise konstanten Transportgeschwindigkeit transportierten Produktgruppe, wobei zum bedarfsweisen Ausschleusen des mindestens einen Produkts oder der mindestens einen Produktgruppe das auszuschleusende Produkt oder die auszuschleusende Produktgruppe in Richtung eines Ausschleusbands (5) beschleunigt wird, und zwar ohne dass eine Geschwindigkeit des auszuschleusenden Produkts oder der auszuschleusenden Produktgruppe in der Hauptförderrichtung (11) verändert und insbesondere reduziert wird.
